Europäisches Patentamt

European Patent Office

Office européen des brevets

(11) Publication number: **0 221 202**
**B1**

# EUROPEAN PATENT SPECIFICATION

(45) Date of publication of the patent specification:
27.06.90

(51) Int. Cl.⁵: **H05K 9/00, H01H 1/02**

(21) Application number: 85201778.9

(22) Date of filing: 01.11.85

(54) Lightning protection for aircraft structures.

(43) Date of publication of application:
13.05.87 Bulletin 87/20

(45) Publication of the grant of the patent:
27.06.90 Bulletin 90/26

(84) Designated Contracting States:
DE FR GB IT NL

(56) References cited:
DE-A- 3 313 967
DE-U- 7 009 197
US-A- 3 166 660
US-A- 3 574 570
US-A- 3 962 550

(73) Proprietor: THE BOEING COMPANY, P.O. Box 3707 Mail
Stop 7E-25, Seattle Washington 98124(US)

(72) Inventor: Holton, Raymond G.C., 16110 - 122nd Place,
N.E., Bothell Washington 98011(US)

(74) Representative: Hoijtink, Reinoud et al,
OCTROOIBUREAU ARNOLD & SIEDSMA
Sweelinckplein 1, NL-2517 GK Den Haag(NL)

## Description

The present invention relates to lightning protection for aircraft structures and more particularly to a lightning protection electrical circuit path for providing electrical conductivity between aircraft structures.

Clip-like structures for providing electrical conductivity between adjacent structures are known in the patent literature as exemplified by U.S. Patents Nos. 3,885,084; 3,962,550; and German Patent No. 2601277. Heretofore, prior art approaches to the problem of lightning protection have not been directed to electrical current path coupling protection between structures with recognition that the solution to the problem should also address the harsh and very variable atmospheric conditions that require extensive corrosion protection. Prior art approaches did not recognize at the same time, the variable contours and curved surface structural connections that were required in circuit path coupling between aircraft structures in the harsh environment. Prior art considerations further did not recognize that the electrical circuit path coupling for lightning protection should be suitable for coupling between interfaces at normal angles and also interfaces parallel to each other and also between interface structures which were removable one with respect to the other.

As a consequence of the preceding, preferred embodiments of the present invention utilize a grounding strip member electrically coupled to a first aircraft structural member, a grounding clip member electrically coupled to a further aircraft structural member, and tungsten carbide coatings on the contact faces between the grounding strip member and the grounding clip member.

A full understanding of the invention, and of its further objects and advantages and the several unique aspects thereof, will be had from the following description when taken in conjunction with the accompanying drawings in which:

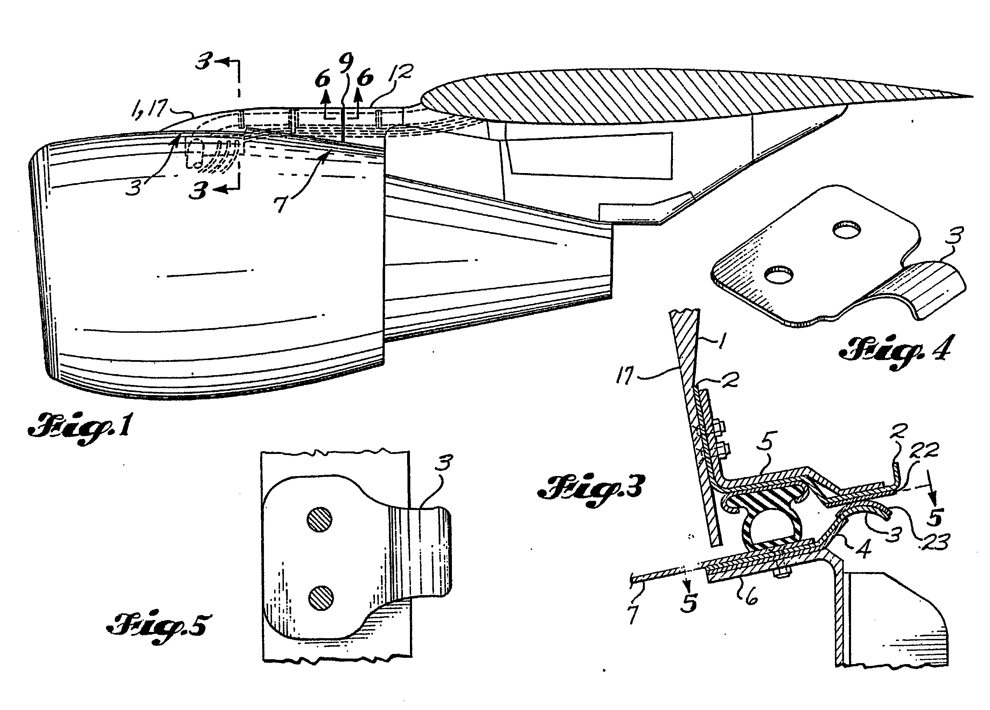

FIGURE 1 is a side view of an aircraft power pack and strut structure, detailing the areas around the forward or upper spar;

FIGURE 2 is a isometric view of the power pack and strut shown in FIGURE 1 further showing the removable access cover removed and unlatched from the main structure and interface;

FIGURE 3 is a sectional view taken along the lines 3-3 of FIGURE 1 showing a first embodiment of the present lightning protection electrical circuit path for coupling between aircraft structures wherein coupling is provided between the forward fairing and fan cowl support structures of FIGURE 1 and 2;

FIGURE 4 is an isometric view of the metal ground clip member utilized in the lightning protection electrical current path for coupling between aircraft structures shown in FIGURE 3;

FIGURE 5 is a plan view of the metal ground clip member shown in FIGURE 4;

FIGURE 6 is a section taken along the lines 6-6 of FIGURE 1 showing a further embodiment of lightning protection electrical circuit path for coupling between aircraft structures where the edge is parallel to the structural interface in contrast to the embodiment of FIGURE 3 where the edge is approximately normal or at an angle to the structural interface;

FIGURE 7 is an isometric view of the metal ground clip member shown in the embodiment of FIGURE 6;

FIGURE 8 is a plan view of a plurality of metal ground clip members as shown in FIGURE 7, however, distributed along the edge of a structural interface;

FIGURE 9 is a section taken along the line 9-9 shown in FIGURE 8 detailing the circuit path in a structural manner between aircraft structural components;

FIGURE 10 is an exploded sectional view of FIGURE 9 showing in more detail the actual components of the circuit path shown structurally in FIGURE 9, thereby enabling a trace of the electrical current path in corrosion resistant steel through a component edge;

FIGURE 11 is a sectional view of a typical composite sandwich panel edge showing lightning protection shielding layers on the internal face side and the external face side, thereby providing lightning protection shielding over both complete surface regions of the composite sandwich panel structure;

FIGURE 12 is an exploded view of the lightning protection electrical current path denoted by arrows for coupling between aircraft structural members 1 and 12 as shown in the structural embodiment representation of FIGURE 6; and,

FIGURE 13 is a lightning protection electrical current path diagram for coupling between aircraft structures 1 and 6 as shown in the structurally represented embodiment of the circuit path of FIGURE 3.

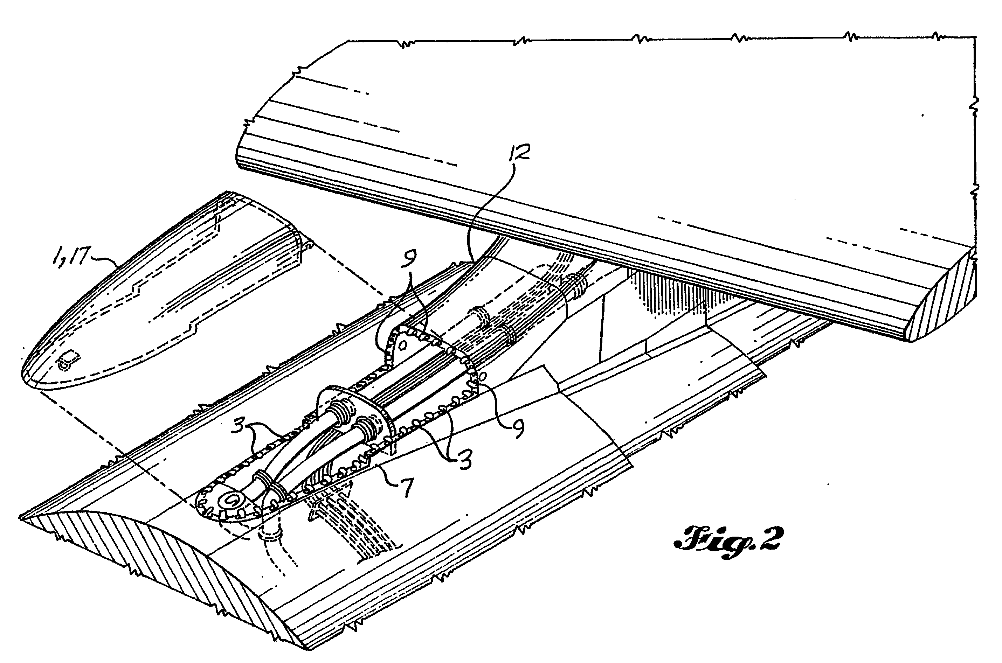

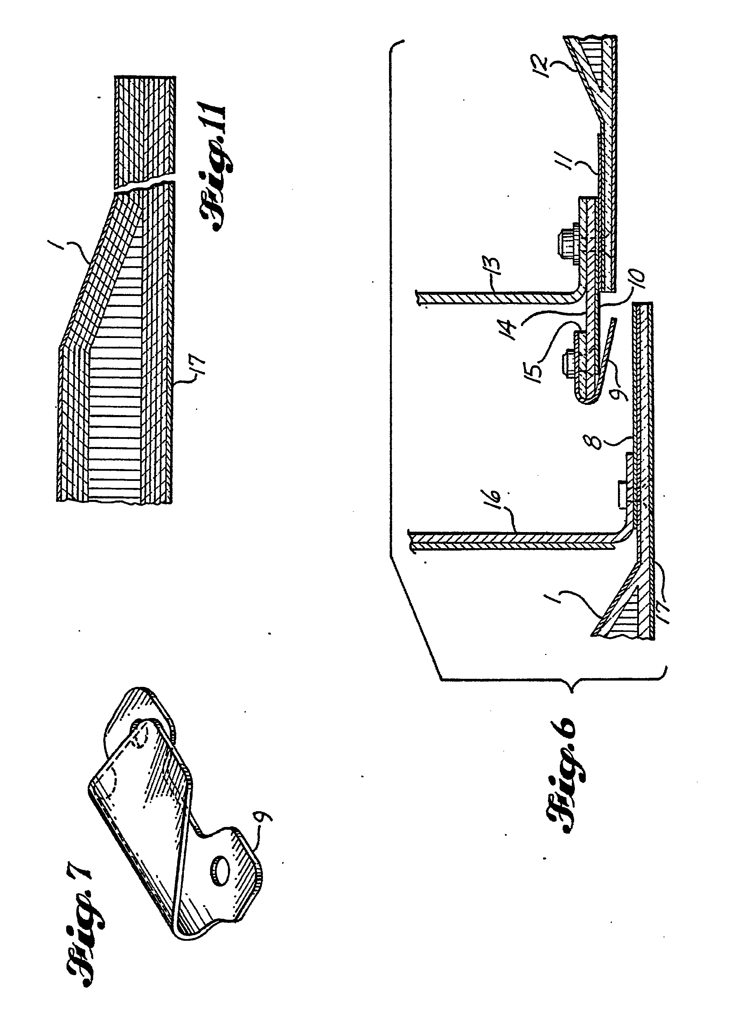

Turning now to FIG. 3, it can be seen that lightning protection shielding layers on aircraft structural member 1, e.g. the forward fairing, make electrical contact from the external face to the internal surface through the permanent structural fasteners. The internal surface of structural member 1 makes electrical contact with grounding strip member 2. Grounding strip member 2 makes electrical contact with grounding clip member 3 comprising a gap-filling lightning protection clip. Grounding clip member 3 can be seen in FIGS. 4 and 5 to comprise a rectangular shaped base portion having two apertures therein for mounting to adjacent aircraft support structure, viz. fan cowl support member 6, the rectangular base support portion extending on one side thereof to provide a tongue-like flexible contact portion for flexed contact against grounding strip member 2. The interface surfaces on grounding strip member 2 and grounding clip member 3 (the tongue-like extended portion thereof) are provided with tungsten carbide coatings respectively 22 and 23. Tungsten carbide coatings 22 and 23 prevent wear and gauling. Gap-filling grounding clip member 3 has a thickness of about 0.016 inches. Grounding strip member 2 and grounding clip member 3 bridge the gap across the joint between structural members 1 and 6 thereby preventing electrical current jumping the gap and causing sparking and electrical current leakage to the inside region. Grounding clip member 3 and member 4 make electrical contact with supporting structural member 7, thereby completing the electrical and lightning protection circuit across the interface. Grounding strip member 2, grounding clip member 3, and member 4 comprise corrosion-resistant steel, viz. stainless steel, thereby preventing atmospheric corrosion but still providing a continuous bare metal electrical path for conductivity. Member 5 comprising the forward fairing angle, fan cowl support member 6, and member 7 comprising the fan cowl support skin are fully corrosion-resistant finished to protect against variable atmospheric corrosion elements over the aircraft lifespan. The aforementioned members 5, 6, and 7 are made of aluminum alloy material for the light-weight design requirements. Aluminum alloy corrosion occurs unless full corrosion protection is provided against atmospheric conditions to which the aircraft are subjected.

Turning now to FIGS. 3 and 6, it should be noted that grounding clip member 3 and grounding clip member 9, respectively, are the gap-filling lightning protection clip structures which are configured geometrically to permit them to be utilized on variable contured surfaces without the requirement of adapting the respective grounding clip members to fit the various contours of the many different aerodynamic geometric shapes in different applications of the present lightning protection electrical circuit path coupling structures.

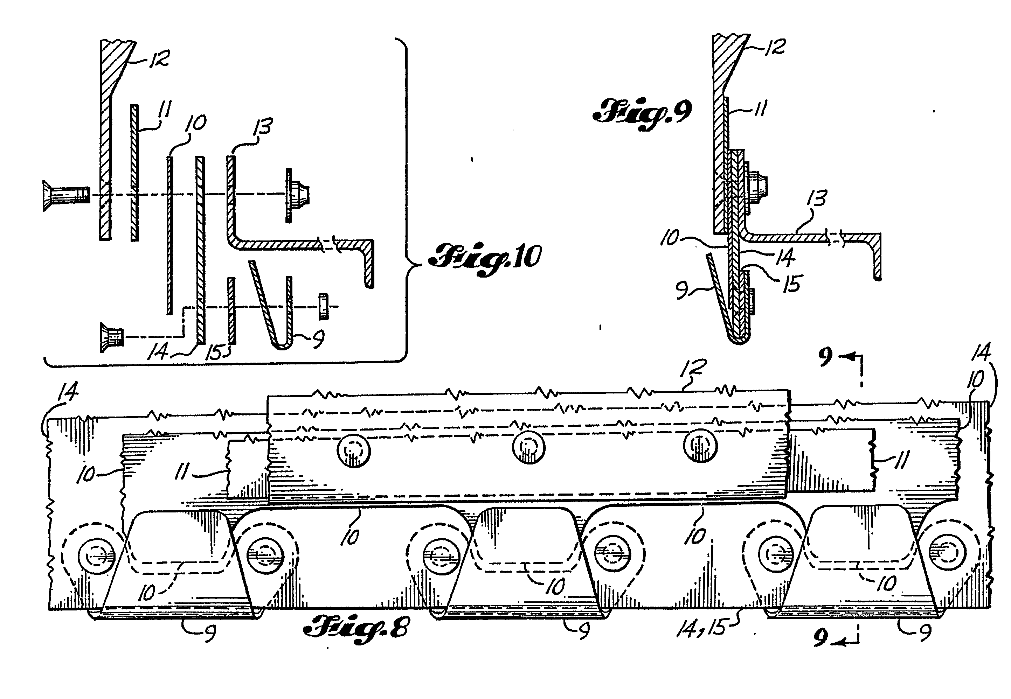

Turning now to FIGS. 7 and 8, it will be noted that, in accordance with the second embodiment of the present lightning protection electrical circuit path for coupling between aircraft structures, the grounding clip member 9 (corresponding to grounding clip member 3 of FIG. 3) is U-shaped in that the elongated tongue-like portion extending from the base thereof is doubled back on itself with respect the the base portion and is similarly attached by two fasteners as shown in the base portion. Grounding clip member 9 performs a similar function as the aforementioned grounding clip member 3 of FIG. 3 in that, in the second embodiment of FIG. 9, grounding clip member 9 abuts grounding strip member 10 as seen in FIGS. 8, 9, and 10.

Referring now to FIG. 6, it will be noted that a similar grounding strip member 8 makes contact with structural member 1 as did grounding strip member 2 with forward fairing 1 in FIG. 3, grounding strip member 8 of FIG. 6 having a thickness of about 0.005 inches. Grounding strip member 8 of FIG. 6 makes electrical contact with U-shaped grounding clip member 9, thereby bridging the gap and providing electrical conductivity through the circuit path across the joint between the aircraft structural members 1 and 12 thus preventing current from jumping the gap and also preventing electrical current leakage to the inside surfaces and structure. The abutting surfaces of grounding strip member 8 and grounding clip member 9 are coated with tungsten carbide to prevent wear and gauling in the manner that the coatings 22 and 23, respectively, were applied to ground strip member 2 and grounding clip member 3 in the structure of FIG. 3. Grounding clip member 9 of FIG. 6 has a thickness of about 0.016 inches. Grounding clip member 9 makes electrical contact with member 10 which comprises the fixed fairing support structure, member 10 makes electrical contact with member 11 which comprises the fixed fairing panel. Member 11 makes electrical contact with member 12 which is the lightning protection layer and thereby providing the requisite electrical circuit path into the interfacing structure, viz. composite, sandwich panel, etc. Members 8, 9, 10, and 11 comprise corrosion-resistant steel, viz. stainless steel material, thereby preventing atmospheric corrosion but still providing a continuous bare metal electrical contact path. Members 13, 14, 15, and 16 comprise aluminum alloy material for lightweight design, thereby satisfying the minimum weight requirements for fuel economy of the aircraft. Further, members 13, 14, 15, and 16 are fully corrosion-resistant finished to thereby protect against variable atmospheric corrosion over the life span of the aircraft. Aluminum alloy thereby finished as members 13, 14, 15, and 16 do not provide an electrical current path, thereby restricting the electrical current path to the bare corrosion-resistant steel members hereinbefore described, viz. those comprising stainless steel.

Turning now to FIGS. 9 and, more particularly, 10 a comparison of, and illustration of the method of integrating coating aluminum structure with bare corrosion-resistant steel, viz. stainless steel, to provide a continuous electrical current path can be readily seen. In this regard, as previously noted, members 8, 9, 10, and 11 are made of corrosion-resistant stainless steel material and provide a continuous bare metal electrical contact path whereas as members 13, 14, 15, and 16, in contrast, are made of aluminum alloy material which is fully corrosion-resistant finished and which does not provide an electrical current path.

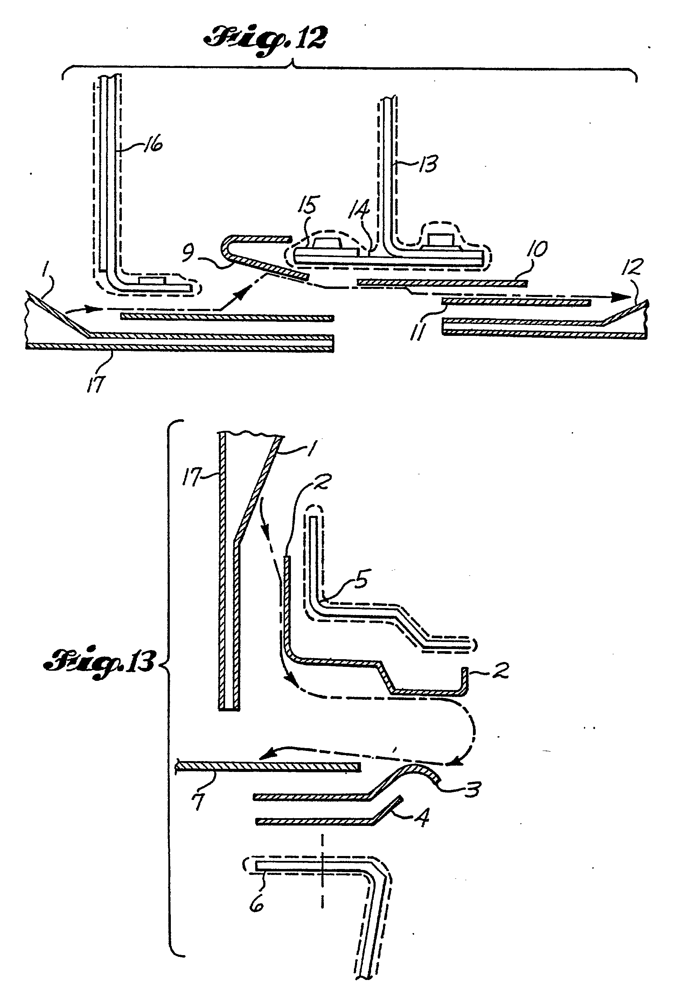

Layers 1 and 17 of the structure shown in FIG. 11 are shielding layers on the internal face side and also on the external face side of the composite sandwich panel or door structure shown. Layer 1, in the event of a composite structure constructed of non-metallic composite material, is an aluminum foil layer and, on a graphite composite structure, layer 1 comprises an aluminum foil layer with a fiberglass layer against the graphite. Layer 17 on the external face on a non-metallic composite material panel comprises a fiberglass weave coated with aluminum and in a graphite composite panel this same layer 17 requires a layer of non-metallic composite material between it and the graphite surface. (Aluminum corrodes when in contact with graphite and, therefore, the above requirements are necessary on a graphite composite panel.) Suitable coupling between such composite structures is shown in FIG. 6.

FIG. 12 is included as a circuit schematic showing current flow path represented by arrows through the lightning protection electrical current path coupling structure shown in FIG. 6 while FIG. 13 is representative of the current path flow through the

lightning proteotion electrical current coupling structure shown in FIG. 3. Again, an understanding of the current flow, as indicated by the arrows, is had by an understanding of which elements are conductive and which elements are non-conductive in the complete coupling structure.

**Claims**

1. A lightning protection electrical current path for coupling between aircraft structures comprising:
a first aircraft structure (1);
a second aircraft structure (6, 12);
a grounding clip (3, 9) electrically conductively connected to said first aircraft structure (1);
a grounding strip (2, 10, 8) electrically conductively connected to said second aircraft structure (6, 12);
said grounding clip (3, 9) and said grounding strip (2, 8, 10) comprising stainless steel; and, said grounding strip (3, 9) and said grounding clip (2, 8, 10) having tungsten carbide coated interfacing and abutting surface portions.

2. The invention according to claim 1 wherein said grounding clip (9) comprises an U-shaped member.

3. The invention according to claim 1 wherein said grounding clip (3) comprises a rectangular shaped portion having a curved tongue portion extending from said rectangular shaped portion.

**Patentansprüche**

1. Elektrischer Blitzschutzstromweg zum Verbinden zwischen Flugzeugstrukturen, umfassend:
eine erste Flugzeugstruktur (1);
eine zweite Flugzeugstruktur (6, 12);
eine Masseanschlußlasche (3, 9), die elektrisch leitend mit der ersten Flugzeugstruktur (1) verbunden ist;
einen Masseanschlußstreifen (2, 10, 8), der elektrisch leitend mit der zweiten Flugzeugstruktur (6, 12) verbunden ist;
wobei die Masseanschlußlasche (3, 9) und der Masseanschlußstreifen (2, 8, 10) rostfreien Stahl umfassen; und
wobei der Masseanschlußstreifen (3, 9) und die Masseanschlußlasche (2, 8, 10) mit Wolframcarbid beschichtete Oberflächenteile haben, die Berührungsflächen bilden und aneinander anstoßen.

2. Erfindung gemäß Anspruch 1, worin die Masseanschlußlasche (9) ein U-förmiges Teil umfaßt.

3. Erfindung nach Anspruch 1, worin die Masseanschlußlasche (3) einen rechteckig geformten Teil umfaßt, der einen gekrümmten Zungenteil hat, welcher sich von dem rechteckig geformten Teil aus erstreckt.

**Revendications**

1. Trajet de circuit d'un courant électrique pour la protection contre la foudre destiné au couplage de structures d'un aéronef, comprenant:
une première structure (1) d'aéronef,
une seconde structure (6, 12) d'aéronef,
une griffe (3, 9) de mise à la masse reliée à la première structure (1) d'aéronef d'une manière qui permet la circulation d'un courant électrique,
une bande de mise à la masse (2, 10, 8) reliée à la seconde structure (6, 12) de l'aéronef d'une manière qui permet la circulation d'un courant électrique,
la griffe de mise à la masse (3, 9) et la bande de mise à la masse (2, 8, 10) comprenant de l'acier inoxydable, et
la bande de mise à la masse (2, 8, 10) et la griffe de mise à la masse (3, 9) portent du carbure de tungstène qui recouvre les parties d'interface et de surface de butée.

2. Invention selon la revendication 1, dans laquelle la griffe de mise à la masse (9) est un organe en U.

3. Invention selon la revendication 1, dans laquelle la griffe de mise à la masse (3) a une partie de forme rectangulaire comprenant une partie courbe de languette dépassant de la partie de forme rectangulaire.

Fig.1

Fig.3

Fig.4

Fig.5

Fig.2

Fig.7

Fig.11

Fig.6

EP 0 221 202 B1

Fig.8

Fig.9

Fig.10

EP 0 221 202 B1

Fig. 12

Fig. 13